# EUROPEAN PATENT APPLICATION

(11) **EP 3 754 526 A1**
(43) Date of publication of application: **23.12.2020**
(21) Application number: 19305777.5
(22) Date of filing: 18.06.2019
(51) Int. Cl.: G06F 21/52, G06F 21/54, G06F 21/56

(54) **METHOD FOR CONTROLLING AN EXECUTION FLOW OF AN APPLICATION**

(71) Applicant: GEMALTO SA, 92190 Meudon (FR)
(72) Inventor: FOKLE KOKOU, Milas, 92190 Meudon (FR)
(74) Representative: Bricks, Amélie

(57) **Abstract**

The present invention relates to a method for controlling an execution flow of an application comprising a plurality of instructions to be loaded in a memory of a computing device and to be executed by a processor of said computing device,
said method comprising, performed by a loader of said computing device before their execution, the steps of:
- loading (S1) said instructions into the memory,
- comparing (S2) said instructions loaded into the memory to a list of prohibited instructions to detect prohibited instructions of said execution flow,
- when a prohibited instruction is detected, replacing (S2) in the memory the prohibited instruction by a non-prohibited instruction,
- triggering (S3) an execution by said processor of the instructions in said memory.

## Description

### FIELD OF THE INVENTION

The present invention relates to a method for controlling the execution flow of an application and more particularly to a method for preventing the execution of prohibited instructions during the execution of the application.

### BACKGROUND OF THE INVENTION

Most existing computing devices, such as computers, smartphones, servers... may now be used to perform sensitive operations such as file encryption or decryption, online payment, issuing signatures... In order to perform such operations, such devices must securely store secret data such as private keys or personal data.

The privacy of such data is ensured by encrypting it and/or restricting access to such data, in order to prevent any attacker from gaining knowledge of such data.

Nevertheless, some basic, low-level, operations of the processor of such computing devices may be used by an attacker to exploit their vulnerabilities. For example, jump or call instructions may be fraudulently used by an attacker in order to make the computing device execute some code designed by the attacker to gain access to the private data of the computing device. In order to do so, the attacker may benefit from the execution of a legitimate application calling a function in a shared library and replace this shared library by a forged one such that the called function triggers an execution of attacker's code.

Existing antivirus programs, when running on a computing device, scan on-the-fly the instructions executed by the computing device and halt the execution of a program when a prohibited operation, categorized as an attack, is detected. A drawback of such a behavior is that the execution flow of a running program is stopped each time a fraudulent behavior of the program is suspected. Then, if a user wants the program to keep running, it is up to him to authorize the execution of the suspicious operation.

Consequently, there is a need for a method enabling to prevent the execution of prohibited operations in a program while enabling the other operations of the suspicious program to keep executing without requiring any action from a user.

### SUMMARY OF THE INVENTION

For this purpose and according to a first aspect, this invention therefore relates to a method for controlling an execution flow of an application comprising a plurality of instructions to be loaded in a memory of a computing device and to be executed by a processor of said computing device,
said method comprising, performed by a loader of said computing device before their execution, the steps of:
- loading said instructions into the memory,
- comparing said instructions loaded into the memory to a list of prohibited instructions to detect prohibited instructions of said execution flow,
- when a prohibited instruction is detected, replacing in the memory the prohibited instruction by a non-prohibited instruction,
- triggering an execution by said processor of the instructions in said memory.

It enables to prevent the execution of these prohibited instructions, and at the same times enables the application to run, without any security threat to the private data stored in the computing device.

Said prohibited instruction may be:
- a jump to an address outside of the memory space of said application,
- a jump to an address of a register of said processor,
- a call or a jump to an address of an unknown instruction,
- a print to a standard output.

Preventing the execution of such instructions enables to prevent an attacker to exploit vulnerabilities of the computing device for gaining access to secret data in the memory of the computing device or executing malicious code.

A prohibited instruction may be replaced by an instruction among NOP, return, print, log or exit.

Such a replacement of the prohibited instructions enables to execute safely the application. The large choice of replacement instructions enables to define various security policies in which the replacement instruction may be chosen depending on the threat level of the prohibited instruction to be replaced.

According to a second aspect, this invention relates to a computer program product directly loadable into the memory of at least one computer, comprising software code instructions for performing the steps of the method according to the first aspect of the invention when said product is run on the computer.

According to a third aspect, this invention relates to a host computer comprising a processor, a memory and an input-output interface,
said processor, said memory and said input-output interface being configured to perform the steps of the method according to the first aspect of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a computing device according to the present invention;
- Figure 2 illustrates schematically a method for controlling an execution flow of an application according to an embodiment of the present invention.

### DETAILED DESCRIPTION OF EMBODIMENTS OF THE INVENTION

The invention relates to a method for controlling the execution flow of an application by a computing device 100.

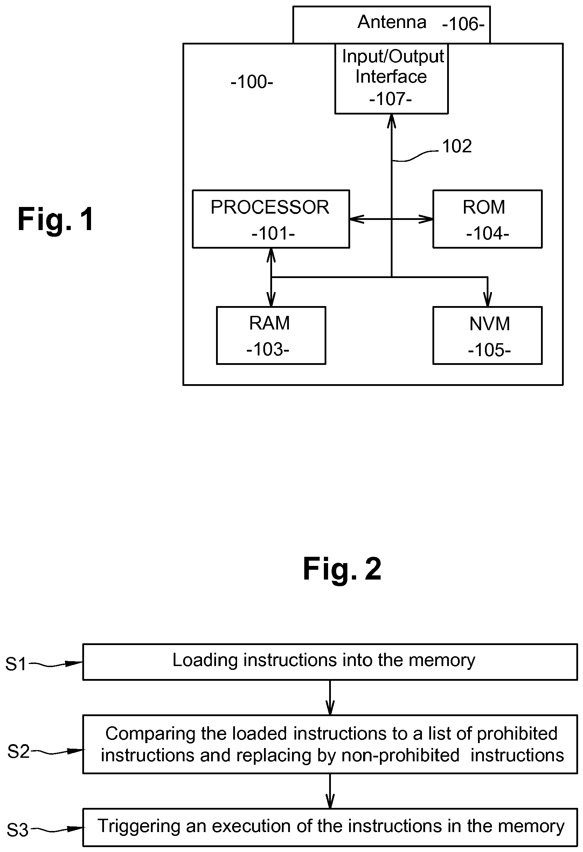

As shown on **Figure 1****,** the computing device 100 according to the invention may include a processor 101 connected via a bus 102 to a random access memory (RAM) 103, a read-only memory (ROM) 104, and/or a non-volatile memory (NVM) 105. It may further include a connector connected to the bus and by which the computing device may be connected to an antenna 106. Such an antenna may be used to connect the computing device to various forms of wireless networks, e.g., wide-area networks, WiFi networks, or mobile telephony networks. Alternatively, the computing device may connect to networks via wired network connections such as Ethernet. The computing device may also include an input/output interface 107 providing interfaces to the user of the computing device, such as one or more screens, loudspeakers, a mouse, tactile surfaces, a keyboard etc...

Such a computing device may for example be a personal computer, a computer server, a smartphone or a smartcard.

The application to be executed by the computing device 100 may be stored in the ROM 104 or the NVM 105 of the computing device, under the form of compiled code. It comprises a plurality of instructions to be loaded in the RAM 103 of the computing device, in order to be executed by the processor 101 of the computing device.

The main idea of the invention is to prevent the execution of prohibited instructions that could be harmful to the computing device by checking the instructions loaded in the RAM before their execution and by replacing prohibited instructions by other instructions, similar but safe. By doing so, the computing device is protected against API calls and malicious code execution that would result in the exposure of sensitive data stored in the memory of the computing device.

The following paragraphs describe, as illustrated on **Figure 2****,** the steps performed by a software loader of the computing device, before the execution of an application by the computing device.

During a first step S1, the loader loads the instructions of the application in the RAM memory of the computing device. In order to do so, when the application is stored in the computing device as a compiled code file stored in the ROM or NVM of the computing device, the loader may open the file for reading it, allocate a memory space in the RAM and then copy all the application code, including the headers, in the allocated memory space.

During a second step S2, the loader may compare the instructions loaded in the RAM during the first step to a list of prohibited instructions in order to detect prohibited instructions of the execution flow of the application to be executed. The loader may check all the instructions of the application to be executed, or just the applications of a sub-part of this application. In order to do so, the loader may disassemble the instructions, resolve the addresses called or jumped to in the instructions, and then compare it against a blacklist of prohibited instructions or addresses in the RAM. Such a blacklist may be predefined by an administrator of the computing device and stored as a file in the ROM or the NVM of the computing device. Examples are given here after.

During this second step S2, when a prohibited instruction is detected, the loader replaces it in the RAM by a non-prohibited instruction. The instruction to be copied in the RAM as a replacement may be determined according to a security policy also predefined by an administrator of the computing device. Examples are given here after.

During a third step S3, the loader triggers the execution by the processor of the instructions in the RAM of the computing device. In order to do so, the loader may recompile the application code, including the replacement instructions, re-populate the memory map with appropriate addresses, and trigger a jump to the application entry point. By doing so, no prohibited instruction is executed and replacement instructions are executed instead, when needed.

Prohibited instructions may comprise calls or jumps to any address of a register of the processor, such as eax, rax, r1, r2... Such jumps may be prohibited in order to prevent for example a shell code injection. Such an instruction may be replaced as soon as it is detected, whatever the address of the jump. As a result, in such a case, resolving the exact address of the instruction is not necessary.

Prohibited instructions may also comprise calls or jumps to any address outside of the memory space allocated to the application to be executed. Such a jump may be used by an attacker for reading private data to be kept secret, or for triggering the execution of malicious code injected by the attacker in another part of the RAM, and shall therefore be prevented.

Prohibited instructions may also comprise calls or jumps to any address of an unknown instruction. Such a jump may be used to trigger the execution of a harmful function of a malicious API or shared library and shall therefore be prevented.

Prohibited instructions may also comprise prints to the standard output "stdout", which may be manipulated in order to expose secret data stored in the memory of the computing device.

During the second step S2, each prohibited instruction may for example be replaced according to the security policy by one instruction or by a combination of instructions among the following instructions :
- A "NOP" instruction appropriate to the processor's architecture;
- A "return" instruction;
- Printing an alert message on the screen;
- Writing a message in a log file;
- An "exit" instruction;
- A similar but safer instruction. For example a prohibited call to a function of an API may be replaced by a call to a similar function in another API which is deemed safe.

Replacing prohibited instructions by such instructions allows to prevent their execution and still enables the execution of the application, for example when the security policy instructs the loader to just skip the prohibited instruction (replacement by NOP) or to perform a similar but safer operation instead of the prohibited operation. Various security policies may be defined in which the replacement instruction may be chosen depending on the threat level of the prohibited instruction to be replaced.

According to a second aspect, the invention relates to a computer program product directly loadable into the memory of at least one computer, comprising software code instructions for performing, when said product is run on the computer, the steps of the method described here before.

According to a third aspect, the invention relates to a host computer comprising a processor, a memory and an input-output interface, said processor, said memory and said input-output interface being configured to perform the steps of the method described here before.

In addition to these features, the computer program according to the second aspect of the invention, the host computer according to the third aspect of the invention may be configured for performing or may comprise any other features described here before.

Therefore, the proposed method and computer enable to prevent the execution of prohibited operations in a program while enabling the other operations of the suspicious program to keep executing without requiring any action from a user.

## Claims

1. A method for controlling an execution flow of an application comprising a plurality of instructions to be loaded in a memory (103) of a computing device (100) and to be executed by a processor (101) of said computing device,
said method comprising, performed by a loader of said computing device before their execution, the steps of:
- loading (S1) said instructions into the memory,
- comparing (S2) said instructions loaded into the memory to a list of prohibited instructions to detect prohibited instructions of said execution flow,
- when a prohibited instruction is detected, replacing (S2) in the memory the prohibited instruction by a non-prohibited instruction,
- triggering (S3) an execution by said processor of the instructions in said memory.

2. The method of claim 1, wherein said prohibited instruction is a jump to an address outside of the memory space of said application.

3. The method of claim 1, wherein said prohibited instruction is a jump to an address of a register of said processor.

4. The method of claim 1, wherein said prohibited instruction is a call or a jump to an address of an unknown instruction.

5. The method of claim 1, wherein said prohibited instruction is a print to a standard output.

6. The method of claim 1, wherein a prohibited instruction is replaced by an instruction among NOP, return, print, log or exit.

7. A computer program product directly loadable into the memory of at least one computer, comprising software code instructions for performing the steps of any one of claims 1 to 6 when said product is run on the computer.

8. A host computer (103) comprising a processor (101), a memory (103, 104, 105) and an input-output interface (107),
said processor, said memory and said input-output interface being configured
to perform the steps of any one of claims 1 to 6.
